Europäisches Patentamt

(19) **European Patent Office**

**Office européen des brevets**

(11) Publication number: **0 203 044**
A2

(12) # EUROPEAN PATENT APPLICATION

(21) Application number: **86830136.7**

(22) Date of filing: **22.05.86**

(51) Int. Cl.⁴: **F 02 B 19/14**

(30) Priority: **24.05.85 IT 4811785**

(43) Date of publication of application:
**26.11.86 Bulletin 86/48**

(84) Designated Contracting States:
**DE FR GB**

(71) Applicant: **B-ART s.a.s.**
**Via Mazzini, 174**
**I-40139 Bologna(IT)**

(72) Inventor: **Biagini, Livio**
**c/o B-ART s.a.s. Via Mazzini 174**
**I-40139 Bologna(IT)**

(74) Representative: **de Simone, Domenico et al,**
**Ing. Barzanò & Zanardo Roma S.p.A. Via Piemonte 26**
**I-00187 Roma(IT)**

(54) **A movable wall pre-combustion chamber for two-stroke or four-stroke diesel engines.**

(57) A pre-combustion chamber for two-stroke or four-stroke diesel engines, said chamber consisting of a pre-combustion chamber (14) arranged partially inside the combustion chamber (15), the pre-combustion chamber (14) being open at its lower part, as well as of a movable bottom wall (10) which is made up of the top part of the piston (9), both said pre-combustion chamber (14) and said movable wall (10) being shaped so that, at the Top Dead Center of the piston stroke, they couple without contacting each other, so as a gap is left for allowing the air to pass from the combustion chamber (15) to the pre-combustion chamber (14).

*Fig. 2*

EP 0 203 044 A2

A MOVABLE WALL PRE-COMBUSTION CHAMBER FOR TWO-
STROKE OR FOUR-STROKE DIESEL ENGINES

This invention relates to a movable wall pre-combustion chamber for two-stroke or four-stroke diesel engines. More particularly, the present invention relates to a pre-combustion chamber of the type mentioned above whose particular shaping allows to decrease the cooled surface of the combustion chamber-pre-combustion chamber unit, so that in addition a perfect scavenging is obtained for the removal of the burnt gases.

It is well known that the thermodynamic efficiency of an internal combustion engine essentially depends on the upper temperatures of operation and on the "retarded ignition" which is expressed by the time during which the fuel injected under pressure starts to burn, such factors being the most peculiar features of diesel engines.

Another fundamental factor which is a characteristic of internal combustion engines, and more particularly of diesel engines, is represented by the thermodynamic cycle. Indeed, the area of such cycle in a p, V plot gives the value of the work obtained as a result of the transformation of thermal energy into mechanical energy.

In order to obtain higher cycle efficiencies, attempts are made at increasing the area of said cycle increasing the value of the compression ratio, by improving at most the combustion process, and by decreasing the so-called "retarded ignition". All that gives rise on the other hand to very strong stresses in the engine crankcase and in the moving parts so that the diesel engine is much heav- vier than a controlled ignition engine (the Otto cycle).

The heavy weight of the diesel engine members causes a decrease in the rounds per minute that can be reached, so that the diesel engine is slower than the controlled ignition engine.

A further drawback of the diesel engines consists in the difficulties in cold starting, such difficulties being particularly remarkable in the case of a pre-combustion chamber diesel engine, because of the heat loss occurring as a result of the fact that, with an equal inside compression volume, the outer surface cooled is much larger.

In order to obviate said drawback, the compression ratio is made higher, but such solution gives rise to stronger stresses in the structural parts of the engine.

However, it is to be observed that pre-combustion chamber diesel engines, with respect to the direct injection engines, have a smoother combustion behavior, so that they are easier and much more comfortable in their use, as well as faster and lighter.

Thus, the employment showed advantageous in some cases of diesel engines having a pre-combustion chamber instead of diesel engines with direct injection, though the latter show a higher thermodynamic efficiency.

At the present time, pre-combustion chambers of various shapes and differently arranged with respect to the longitudinal axis of the cylinder, are fundamentally made up of a volume which is about 1/4-1/10 that of the compression chamber, and they are separate from the very combustion chamber and connected to the same through a duct or through an opening which can be of various shapes according to the various types in question.

As is well known, the operation of said pre-combustion chambers occurs as follows:

After the piston has compressed the induction air at the Top Dead Center (which point will be referred to as T.D.C. in the following), the fuel injection starts into the pre-combustion chamber through the injector nozzle. The fuel is thus in the presence of an air volume which is lower than the volume needed for its full combustion, because a part of the air is contained within the combustion chamber.

The fuel injected starts the combustion inside the pre-combustion chamber, where the air under pressure is strongly stirred by the turbulent motions caused by the forced flow of compressed air through the connection duct of the chamber. The part of the fuel which is not yet burnt is injected under high pressure from the pre-combustion chamber into the main combustion chamber, where said unburnt fuel is mixed with fresh air so that the combustion can go on. Thus, the combustion goes on gradually as a result of the turbulent motion caused by the jet out from the pre-combustion chamber.

The combustion process is retarded by:

a) the so-called "retarded combustion" which is a feature of diesel engines, said retarded combustion being at a certain degree a function of the chamber temperature, of the density of oxygen molecules (the density being negatively affected by the fact that said pre-combustion chamber still contains some burnt gas as a residue of the preceding combustion cycle), of the injection pressure and of the turbulence of the fluid motions within the pre-combustion chamber;

b) the delay caused by the propagation through the duct

0203044

connecting the combustion chamber to the pre-combustion chamber of the fuel jet to be burnt with the air contained in the main chamber for the combustion of the same. The time spent for said propagation is certainly very short but it is measurable, so that it gives rise to a certain delay.

Accordingly, it is evident from the above that the presence of the pre-combustion chamber divides the total combustion of the fuel into two moments so that the engine operation is smoother, even though the maximum cycle temperatures decrease because the total cooled surface is much higher. All that gives rise to a lower efficiency and to a more retarded combustion so that the maximum value of rounds per minute obtainable with such engine is lower than the value obtainable with direct injection diesel engines.

Moreover, it is to be remarked that a volume of burnt gases is left behind inside the pre-combustion chamber when the expansion cycle and the exhaust cycle are over, said volume being then mixed with the engine induction air, which air becomes compressed by the pistons. Such presence of burnt gases within the pre-combustion chamber causes a further retardation in the combustion because the fuel droplets injected experience more difficulties in finding the oxygen molecules due to the presence of said residual amounts of burnt gases.

Thus, it is necessary to advance the combustion start so that a higher load is exerted on the piston-rod-crank unit and as a consequence a further reduction occurs in the engine efficiency.

The present invention aims at obviating such drawbacks as well as other disadvantages by supplying a fundamental technical teaching for the realization of a pre-combustion chamber of such a structures as to allow the reduction on the cooled surface of the combustion chamber-pre-combustion chamber unit, so that high operation temperatures of the engine are obtained, as well as more easy in cold starting (in some cases, and within some temperature ranges, it will be also possible to dispense with the glow plug for previous heating), together with a perfect inside "scavenging" of the pre-combustion chamber which completely removes all burnt gases.

According to the present invention, the realization is proposed to that aim of a pre-combustion chamber, preferably in the shape of a bell, said chamber being open at its lower part and provided inside the combustion chamber, the bottom surface of said pre-combustion chamber consisting of the piston head which is opportunely shaped so that it can become coupled with said pre-combustion chamber during the upper stroke of said piston without contacting said pre-combustion chamber, the design of such parts providing a small gap between the pre-combustion chamber and the piston.

The full scavenging of the burnt gases is obtained as a result of the fact that the pre-combustion chamber according to the present invention is inserted intimately within the combustion chamber, because the latter is directly exposed to the flow of fresh air.

Accordingly, it is a specific object of the present invention a pre-combustion chamber for two-stroke of four-stroke diesel engines, said pre-combustion chamber consisting of a pre-combustion chamber arranged partially inside the combustion chamber and being open at its lower part, and of a movable bottom wall on the upper side of the piston, said pre-combustion chamber and said movable wall being both shaped so that, at the Top Dead Center of the piston stroke, they become coupled without contacting each other, and so that a gap is left for the flow of air from the combustion chamber to the pre-combustion chamber.

According to a particularly preferred embodiment of the pre-combustion chamber of the present invention, said chamber is in the shape of a bell and it is arranged centrally within said combustion chamber so as not to be subjected to cooling by the refrigerating fluid. In that way, a higher efficiency and a better cold starting are obtained.

Again according to the present invention, the gap between the movable wall and the pre-combustion chamber is opportunely shaped so that the best air turbulence is obtained and therefore the best mixing of air with the injected fuel.

The present invention will be disclosed in the following with particular reference to some of its preferred embodiments illustrated in the enclosed drawings wherein:

Figure 1 is a vertical cross section schematic view of a pre-combustion chamber of the prior art; and

Figure 2 is a vertical cross section schematic view of the pre-combustion chamber according to the present invention.

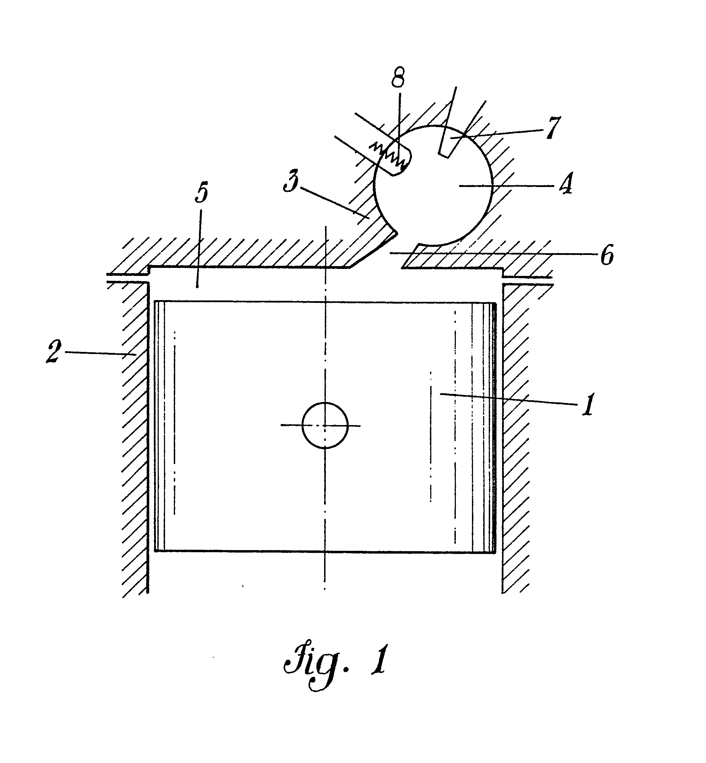

In Figure 1, number 1 points out the piston at its T.D.C., number 2 points out the cylinder and number 3 the engine head.

As can be clearly observed, the pre-combustion chamber 4 is obtained within said engine head 3, the pre-combustion chamber 4 being in communication with the combustion chamber 5 through the duct 6. Said duct 6 usually is shaped in order to obtain maximum turbulence inside the pre-combustion chamber 4, and, when the jet is inverted, inside the chamber 5.

Number 7 shows the diesel oil injector whereas number 8 shows the glow plug employed for making it easier to start the engine.

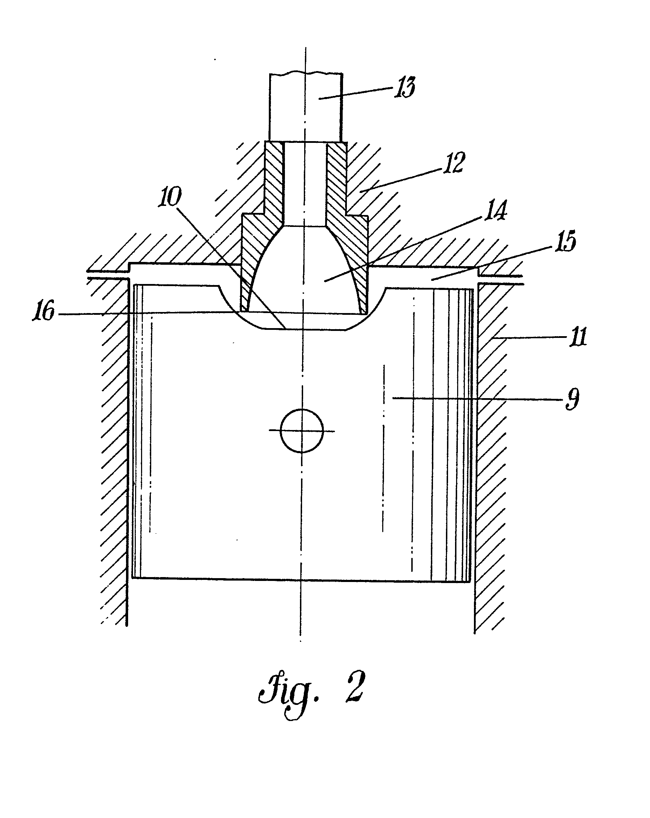

In Figure 2, number 9 points out the piston at its T.D.C., which piston shows the special shape 10 at its upper part, number 11 points out the cylinder, number 12 shows the engine head, and number 13 shows the diesel oil injector. Finally, the reference number 14 points out the bell-shaped pre-combustion chamber which has no bottom, said bottom being made up of the special shaping 10 mentioned above, and the reference number 15 shows the combustion chamber.

Said shaping 10 is designed so that the piston 9, in its upwards motion to its T.D.C. and the pre-combustion chamber 14 become coupled leaving just a small gap 16 between them.

It can be observed that, in Figure 2, neither valves nor ports are shown just to put into evidence that the pre-combustion chamber according to the present invention is indifferently fit both for two-stroke engines and for four-stroke engines.

During the engine operation, when the piston 9 approaches its T.D.C., a turbulent motion is created which is very efficient to force fresh air into the pre-combustion chamber 14. Thus the air, as the piston 9 goes on, has the tendency to become trapped between the pre-combustion chamber 14 and the shaped part 10 of said piston.

As already mentioned above, the pre-combustion chamber 14 and the shaped part 10 do not interfere so that the gap 16 is left free which, if opportunely shaped, creates the best turbulence for obtaining a perfect mixing of the air with the injected fuel.

The pre-combustion chamber 14 is as close as possible to the center of the combustion chamber 15, so that said chamber 14 undergoes no cooling by the refrigerating fluid, and consequently the efficiency is increased and cold starting is improved.

Moreover, as the inside part of the pre-combustion chamber 14 has been in free contact with the fresh intake air, the concentration of burnt gases is eliminated, such concentration being a typical drawback of the pre-combustion chambers of the prior art which are employed at the present time.

At the moment of fuel injection, the fuel droplets tend to become mixed with the air in turbulent motion inside the pre-combustion chamber 14, which chamber in such phase of the engine operation is closed by the piston 9.

As soon as the first combustion occurs, a sudden increase occurs in the pressure with the formation of an annular jet of fuel particles towards the main combustion chamber 15.

By adjusting opportunely the thickness and the shape of the gap 16, the optimal injection can be obtained of the fuel jet, and therefore a more rapid ignition of the residual fuel can also be obtained.

As the combustion is initially confined to the stoichiometric ratio with respect to the air contained in the pre-combustion chamber 14, the cusps are avoided which, with reference to the common p-V plot, are usually observed in the combustion curve of diesel engines having a pre-combustion chamber.

When the piston 9, continuing its stroke, leaves the lower surface of the pre-combustion chamber 14 completely free, all the residual fuel immediately is in the burning conditions because it is no more forced to flow through the channel 6 (see Figure 1), which channel because of other reasons concerning turbulence and progressiveness is usually of a limited cross section so as to throttle the outflow of said fuel.

During the expansion stroke of the piston 9 towards its Bottom Dead Center, and therefore during the successive exhaust and induction strokes (four-stroke engine) or the scavenging stroke (two-stroke engine), the inside of the pre-combustion chamber 14 with the movable wall (the shaped part 10) will be completely exposed to the fluid streams so that a full scavenging will be obtained of the residual burnt gases.

The engine operation which is provided by the pre-combustion chamber according to the present invention will therefore be midway between the operation of a direct injection diesel engine and the pre-combustion chamber diesel engine operation of the current type, so that it is absolutely original and succeeds in integrating into the same solution the advantages of both kinds of diesel engines, with the removal of their drawbacks.

The present invention has been disclosed for illustrative and not for limitative purposes according to some preferred embodiments of the same, but it is to be understood that modifications and changes can be introduced into the same by those who are skilled in the art without departing from the spirit and scope of the invention for which a priority right is claimed.

0203044

CLAIMS:

1. A pre-combustion chamber for two-stroke or four-stroke diesel engines, characterized in that it consists of a pre-combustion chamber partially arranged inside the combustion chamber, said pre-combustion chamber being open at its lower part, and of a movable bottom wall consisting of the top part of the piston, said pre-combustion chamber and said movable wall both being shaped so that, at the Top Dead Center of the piston stroke, they become coupled without contacting each other, and leaving a passage gap for allowing the air to flow from the combustion chamber to the pre-combustion chamber.

2. A pre-combustion chamber according to claim 1, characterized in that said pre-combustion chamber is in the shape of a bell.

3. A pre-combustion chamber according to claims 1 or 2, characterized in that said pre-combustion chamber is arranged at a central position within said combustion chamber.

4. A pre-combustion chamber according to claims 1, 2 or 3, characterized in that said gap between said pre-combustion chamber and said movable wall is so shaped as to obtain the best air turbulence for mixing said air with the injected fuel.

Fig. 1

0203044

Fig. 2